# EUROPÄISCHE PATENTSCHRIFT

(11) **EP 2 195 872 B1**
(45) Veröffentlichungstag und Bekanntmachung des Hinweises auf die Patenterteilung: **26.12.2012**
(21) Anmeldenummer: 08803630.6
(22) Anmeldetag: 04.09.2008
(51) Int. Cl.: H01M 8/04

(54) **VERFAHREN ZUR VERMEIDUNG LOKALER ÜBERHITZUNGEN IN EINER BRENNSTOFFZELLENANORDNUNG SOWIE BRENNSTOFFZELLENANLAGE MIT EINER DERARTIGEN BRENNSTOFFZELLENANORDNUNG**
METHOD FOR PREVENTING LOCAL OVERHEATING IN A FUEL CELL ARRANGEMENT AND FUEL CELL SYSTEM HAVING SUCH A FUEL CELL ARRANGEMENT
PROCÉDÉ POUR ÉVITER LES SURCHAUFFES LOCALISÉES DANS UN SYSTÈME DE PILE À COMBUSTIBLE AINSI QU'ENSEMBLE PILE À COMBUSTIBLE COMPRENANT UN TEL SYSTÈME

(30) Priorität: 28.09.2007 DE 102007046939
(43) Veröffentlichungstag der Anmeldung: 16.06.2010
(73) Patentinhaber: Siemens Aktiengesellschaft, 80333 München (DE)
(72) Erfinder: BRANDT, Torsten, 91301 Forcheim (DE); HAMMERSCHMIDT, Albert, 91056 Erlangen (DE); LERSCH, Josef, 91336 Heroldsbach (DE); LOCHNER, Torsten, 91058 Erlangen (DE); MATTEJAT, Arno, 91056 Erlangen (DE); MEHLTRETTER, Igor, 91054 Buckenhof (DE); STÜHLER, Walter, 96114 Hirschaid (DE); VOITLEIN, Ottmar, 91475 Lonnerstadt (DE)
(86) Internationale Anmeldenummer: PCT/EP2008/061660
(87) Internationale Veröffentlichungsnummer: WO 2009/043674

(56) Entgegenhaltungen:
- WO-A-2005/007771
- DE-A1- 2 604 965
- US-A- 3 704 172

## Beschreibung

Die Erfindung betrifft ein Verfahren zur Vermeidung lokaler Überhitzungen in einer Brennstoffzellenanordnung, die zur Kühlung von einem Kühlmittel durchströmt wird. Die Erfindung betrifft ferner eine Brennstoffzellenanlage mit einer derartigen Brennstoffzellenanordnung.

Beim Betrieb einer Brennstoffzelle muss entstehende Verlustwärme aus dem aktiven Bereich der Brennstoffzelle vollständig entfernt werden, um lokale Überhitzungen (sogenannte "hot spots") in der Brennstoffzelle zu vermeiden. Dies erfolgt bei hohen Stromdichten in einer Brennstoffzelle am effektivsten durch ein flüssiges Kühlmittel, das die Brennstoffzelle durchströmt.

Wegen seiner hohen spezifischen Wärmekapazität, der geringen elektrischen Leitfähigkeit, der guten Medienverträglichkeit und der niedrigen Betriebskosten kommt bei Brennstoffzellen mit einer Polymer-Elektrolyt-Membran (PEM-Brennstoffzellen) hauptsächlich Deionat als Kühlmittel zum Einsatz.

Die Kühlung einer Brennstoffzelle in einer Brennstoffzellenanordnung erfolgt meist dadurch, dass das Kühlmittel durch Hohlräume in Bipolarplatten oder durch sogenannte Kühleinheiten der Brennstoffzellenanordnung strömt. Ein durch eine Brennstoffzellenanordnung strömendes Kühlmittel wird auf seinem Weg kontinuierlich aufgeheizt und erreicht beim Austritt aus der Brennstoffzellenanordnung eine maximale Temperatur. Bei PEM-Brennstoffzellen mit Deionat als Kühlmittel liegen übliche Austrittstemperaturen beispielsweise bei ca. 80°C.

Die Temperaturerhöhung hat ein Ansteigen des Dampfdrucks zur Folge. Erreicht oder unterschreitet in einer Brennstoffzelle der Betriebsdruck des Kühlmittels seinen Siedegleichgewichtsdruck, so kann es zur Bildung eines Dampffilmes zwischen der flüssigen Phase des Kühlmittels und der Wand, über die die Wärmeabfuhr aus dem aktiven Bereich der Brennstoffzelle an das Kühlmittel erfolgt, kommen. Daraus resultiert eine schlechtere Übertragung der Verlustwärme auf das Kühlmittel und es können lokale Überhitzungen ("hot spots") in der Brennstoffzelle auftreten, die beispielsweise im Fall einer PEM-Brennstoffzelle zu einer thermischen Schädigung der Membran bis hin zu einer Lochbildung in der Membran führen können.

Aus der WO 2005/007771 A1 geht eine Regelung des Drucks eines Kühlmittels für einen Brennstoffzellenstapel hervor, so dass das Kühlmittel einen Siedepunkt oberhalb der Betriebstemperatur aufweist.

Es ist deshalb Aufgabe vorliegender Erfindung, ein Verfahren sowie eine Brennstoffzellenanlage anzugeben, die es ermöglichen, derartige lokale Überhitzungen zu vermeiden.

Die Lösung der auf das Verfahren gerichteten Aufgabe gelingt durch ein Verfahren gemäß Patentanspruch 1. Vorteilhafte Ausgestaltungen des Verfahrens sind jeweils Gegenstand der Ansprüche 2 bis 4. Die Lösung der auf die Brennstoffzellenanlage gerichteten Aufgabe gelingt durch eine Brennstoffzellenanlage gemäß Patentanspruch 5. Vorteilhafte Ausgestaltungen der Brennstoffzellenanlage sind jeweils Gegenstand der Patentansprüche 6 bis 9.

Das erfindungsgemäße Verfahren zur Vermeidung lokaler Überhitzungen in einer Brennstoffzellenanordnung, die zur Kühlung von einem flüssigen Kühlmittel durchströmt wird, sieht vor, dass der Druck des Kühlmittels nach dem Durchströmen der Brennstoffzellenanordnung auf Erreichen oder Unterschreiten eines vorgegebenen Grenzwertes überwacht wird, der größer als der Siedegleichgewichtsdruck des Kühlmittels ist. Zur Vermeidung einer Dampffilmbildung und somit lokaler Überhitzungen ist es erforderlich, dass der Druck des Kühlmittels in der gesamten Brennstoffzellenanordnung den Siedegleichgewichtsdruck nicht unterschreitet.

Bei Erreichen oder Unterschreiten des Grenzwertes wird die Zufuhr an Reaktanten in die Brennstoffzellenanordnung abgeschaltet. Hierdurch kommen die elektrochemischen Reaktionen in den Brennstoffzellen zum Erliegen und eine Dampffilmbildung des Kühlmittels in der Brennstoffzellenanordnung wird vermieden. Wenn eine Überwachungseinrichtung zur Überwachung der Brennstoffzellenspannung vorhanden ist, führt dies üblicherweise zwangsläufig zu einer Modulabschaltung durch diese Überwachungseinrichtung.

Alternativ wird bei Erreichen oder Unterschreiten des Grenzwertes eine von der Brennstoffzellenanordnung mit elektrischem Strom versorgte Last reduziert oder sogar ganz abgeschaltet.

Möglich ist auch, beim Erreichen oder Unterschreiten des Grenzwertes sowohl die Zufuhr an Reaktanten abzuschalten als auch die von der Brennstoffzellenanordnung mit elektrischem Strom versorgte Last zu reduzieren oder abzuschalten.

Der niedrigste Druck des Kühlmittels liegt hierbei nach dem Durchströmen der Brennstoffzellenanordnung vor. Durch eine Überwachung des Druckes des Kühlmittels nach dem Durchströmen der Brennstoffzellenanordnung können somit lokale Überhitzungen in der Brennstoffzellenanordnung sicher vermieden werden. Das Verfahren ist hierbei gleichsam auf eine Brennstoffzellenanordnung mit nur einer einzigen Brennstoffzelle als auch auf eine Brennstoffzellenanordnung mit mehreren Brennstoffzellen anwendbar, d.h. die Brennstoffzellenanordnung kann nur eine einzige Brennstoffzelle oder aber auch mehrere Brennstoffzellen umfassen.

Die Genauigkeit der Überwachung ist dabei umso größer, je näher der Druck des Kühlmittels am aktiven Bereich der Brennstoffzelle(n) gemessen wird. Von Vorteil wird der Druck des Kühlmittels deshalb unmittelbar nach dessen Austritt aus der bzw. den Brennstoffzellen in einem Kühlmittelabfuhrkanal gemessen, über den das Kühlmittel aus der Brennstoffzellenanordnung abgeführt wird, da dort zum einen die Zugänglichkeit zu einem dafür benötigten Drucksensor gewährleistet ist und zum anderen auch sichergestellt ist, dass der gemessene Druck demjenigen entspricht, der in dem Kühlmittel kurz vor seinem Austritt aus der Brennstoffzelle vorliegt. Ein gegebenenfalls vorliegender Druckverlust zwischen den heißesten Punkten in der (den) Brennstoffzelle(n) und der Druckmessstelle kann dabei durch einen entsprechenden Korrekturfaktor berücksichtigt werden. Die Genauigkeit der Überwachung kann hierbei noch dadurch verbessert werden, dass der Korrekturfaktor in Abhängigkeit von der Brennstoffzellenleistung und/oder der damit verbundenen Drehzahl einer Pumpe, die das Kühlmittel durch die Brennstoffzellenanordnung pumpt, bestimmt wird.

Da der Siedegleichgewichtsdruck des Kühlmittels von der Temperatur des Kühlmittels abhängt, wird der Grenzwert in Abhängigkeit von der Temperatur des Kühlmittels nach dem Durchströmen der Brennstoffzellenanordnung vorgegeben Hierdurch kann die Genauigkeit der Überwachung weiter verbessert werden. Auch die Temperatur des Kühlmittels wird vorzugsweise in dem Kühlmittelabfuhrkanal gemessen. Eine gegebenenfalls vorliegende Temperaturdifferenz zwischen den heißesten Punkten in der (den) Brennstoffzelle(n) und der Temperaturmessstelle kann durch entsprechende Korrekturfaktoren bei der Ermittlung des Siedegleichgewichtsdruckes bzw. des Grenzwertes berücksichtigt werden.

Bevorzugt wird das durch die Brennstoffzellenanordnung strömende Kühlmittel in einem Kreislauf der Brennstoffzellenanordnung eingangsseitig wieder zugeführt, wobei das Kühlmittel mit einer Kühlmittelpumpe durch den Kreislauf gepumpt wird.

Eine erfindungsgemäße Brennstoffzellenanlage mit einer Brennstoffzellenanordnung, die zur Kühlung von einem flüssigen Kühlmittel durchströmbar ist, weist eine Überwachungseinrichtung zur Überwachung des Drucks des Kühlmittels nach dem Durchströmen der Brennstoffzellenanordnung auf Erreichen oder Unterschreiten eines vorgegebenen Grenzwertes auf, der größer als der Siedegleichgewichtsdruck des Kühlmittels ist.

Durch die Überwachungseinrichtung ist bei Erreichen oder Unterschreiten des vorgegebenen Grenzwertes die Zufuhr an Reaktanten in die Brennstoffzellenanordnung abschaltbar. Wenn eine Überwachungseinrichtung zur Überwachung der Brennstoffzellenspannung vorhanden ist, führt dies üblicherweise zwangsläufig zu einer Modulabschaltung durch diese Überwachungseinrichtung.

Alternativ ist durch die Überwachungseinrichtung bei Erreichen oder Unterschreiten des vorgegebenen Grenzwertes die von der Brennstoffzellenanordnung mit elektrischem Strom versorgte Last reduzierbar oder sogar ganz abschaltbar.

Bevorzugt ist ein Drucksensor zur Erfassung des Druckes des Kühlmittels in einem Kühlmittelabfuhrkanal der Brennstoffzellenanordnung angeordnet, da dort zum einen die Zugänglichkeit zu dem Sensor gewährleistet ist und zum anderen auch sichergestellt ist, dass der gemessene Druck in etwa demjenigen entspricht, der in dem Kühlmittel kurz vor seinem Austritt aus der Brennstoffzelle bzw. den Brennstoffzellen vorliegt. Ein gegebenenfalls vorliegender Druckverlust zwischen den heißesten Punkten in der (den) Brennstoffzelle(n) und der Druckmessstelle kann dabei durch einen entsprechenden Korrekturfaktor berücksichtigt werden. Die Genauigkeit der Überwachung kann hierbei noch verbessert werden, wenn der Korrekturfaktor in Abhängigkeit von der Brennstoffzellenleistung und/oder der damit verbundenen Drehzahl einer Pumpe, die das Kühlmittel durch die Brennstoffzellenanordnung pumpt, bestimmbar ist.

Bevorzugt umfasst die Überwachungseinrichtung zusätzlich einen Temperatursensor zur Erfassung der Temperatur des Kühlmittels beim Verlassen der Brennstoffzellenanordnung und in der Überwachungseinrichtung ist der Grenzwert in Abhängigkeit von der erfassten Temperatur vorgebbar. Der Temperatursensor ist von Vorteil ebenfalls in dem Kühlmittelabfuhrkanal angeordnet. Hierdurch kann die Genauigkeit der Überwachung weiter verbessert werden. Eine gegebenenfalls vorliegende Temperaturdifferenz zwischen den heißesten Punkten in der (den) Brennstoffzelle(n) und der Temperaturmessstelle kann durch entsprechende Korrekturfaktoren bei der Ermittlung des Siedegleichgewichtsdrucks bzw. des Grenzwertes berücksichtigt werden.

In der Überwachungseinrichtung kann zur Ermittlung des Grenzwertes in Abhängigkeit von der Temperatur eine Dampfdruckkurve des Kühlmittels abgespeichert sein, die die Abhängigkeit des Siedegleichgewichtsdrucks von-der Temperatur beschreibt.

Die Brennstoffzellenanlage kann hierbei einen Kühlmittelkreislauf aufweisen, durch den das durch die Brennstoffzellenanordnung strömende Kühlmittel der Brennstoffzellenanordnung eingangsseitig wieder zuführbar ist, wobei in dem Kreislauf eine Kühlmittelpumpe zum Pumpen des Kühlmittels durch den Kreislauf angeordnet ist.

Die für das erfindungsgemäße Verfahren und seine vorteilhaften Ausgestaltungen genannten Überlegungen und Vorteile gelten entsprechend für die erfindungsgemäße Brennstoffzellenanlage und ihre vorteilhaften Ausgestaltungen.

Die Erfindung sowie weitere vorteilhafte Ausgestaltungen der Erfindung gemäß Merkmalen der Unteransprüche werden im Folgenden anhand von Ausführungsbeispielen in den Figuren näher erläutert. Es zeigt:
- FIG 1: ein erstes Ausführungsbeispiel einer erfindungsgemäßen Brennstoffzellenanlage und
- FIG 2: ein zweites Ausführungsbeispiel einer erfindungsgemä-βen Brennstoffzellenanlage.

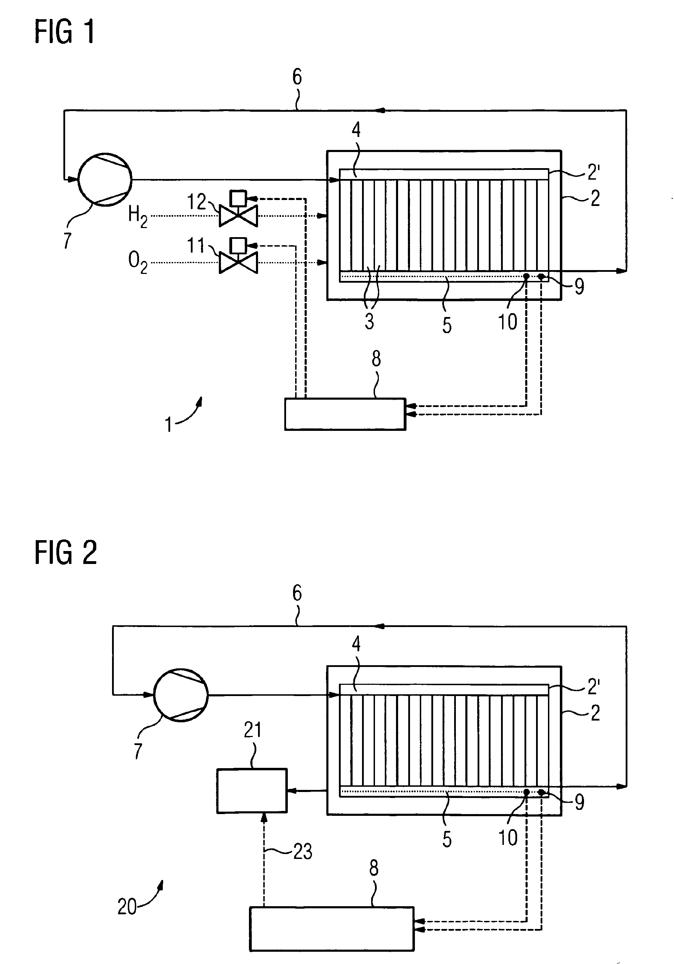

Eine in Figur 1 vereinfacht und schematisch dargestellte Brennstoffzellenanlage 1 umfasst eine Brennstoffzellenanordnung 2, die einen Block 2' aufeinandergestapelter PEM-Brennstoffzellen 3 umfasst, die parallel von einem Kühlmittel durchströmbar sind.

Die Zufuhr des Kühlmittels zu den einzelnen Brennstoffzellen 3 erfolgt über einen Kühlmittelyerteilerkanal 4 und die Abfuhr des Kühlmittels aus den.Brennstoffzellen 3 über einen Kühlmittelsammelkanal 5.

Das Kühlmittel wird hierbei in einem Kreislauf 6 geführt, d.h. das über den Sammelkanal 5 von der Brennstoffzellenanordnung abführbare Kühlmittel ist über den Kreislauf 6 der Brennstoffzellenanordnung 2, d.h. dem Kühlwasserverteilerkanal 4, wieder zuführbar. Eine in dem Kreislauf 6 angeordnete Kühlmittelpumpe 7 dient zum Pumpen des Kühlmittels durch den Kreislauf 6. Die Förderleistung der Kühlmittelpumpe 7 ist über einen Motor variabler Drehzahl steuerbar. Weitere in dem Kreislauf 6 angeordnete Komponenten zur Kühlung des Kühlmittels, wie z.B. Wärmetauscher, sind aus Gründen der Übersichtlichkeit nicht dargestellt.

Eine Überwachungseinrichtung 8 dient zur Überwachung des Drucks des Kühlmittels nach dem Durchströmen der Brennstoffzellenanordnung 2 auf Erreichen oder Unterschreiten eines vorgegebenen Grenzwertes, der größer als der Siedegleichgewichtsdruck des Kühlmittels ist. Die Überwachungseinrichtung 8 umfasst hierzu einen Drucksensor 9 und einen Temperatursensor 10, die außerhalb des eigentlichen Brennstoffzellenstapels am ausgangsseitigen Ende eines Kühlmittelsammelkanales 5, d.h. kurz bevor das Kühlmittel den Sammelkanal 5 verlässt, angeordnet sind, der zur Abfuhr des Kühlmittels aus der Brennstoffzellenanordnung 2 dient. Dort liegen Temperaturen des Kühlmittels vor, die noch in etwa denen des Kühlmittels am Austritt aus den aktiven Bereichen der Brennstoffzellen 3 entsprechen.

In der Überwachungseinrichtung 8 ist dabei der Grenzwert für den Druck in Abhängigkeit von der erfassten Temperatur und eines Sicherheitszuschlages vorgebbar. Hierzu ist in der Überwachungseinrichtung 8 eine Dampfdruckkurve abgespeichert, die die Abhängigkeit des Siedegleichgewichtsdrucks von der erfassten Temperatur beschreibt. Gegebenenfalls vorliegende Druckverluste und Temperaturdifferenzen zwischen den heißesten Punkten in den Brennstoffzellen 3 und dem Ort des Drucksensors 9 bzw. dem Ort des Temperatursensors 10 können durch entsprechende Korrekturfaktoren bei der Ermittlung des Grenzwertes berücksichtigt werden.

Wenn der über den Drucksensor 9 erfasste Druck des Kühlmittels den ermittelten Grenzwert unterschreitet, ist durch die Überwachungseinrichtung durch Schließen der Reaktantenversorgungsventile 11, 12 die Zufuhr an Reaktanten, hier die Zufuhr von Wasserstoff H2 und Sauerstoff 02, in die Brennstoffzellenanordnung 2 abschaltbar.

Beim Betrieb der Brennstoffzellenanlage 1 strömt das flüssige Kühlmittel, z.B. deionisiertes Wasser, über den Verteilerkanal 4 parallel durch die Brennstoffzellen 3 der Brennstoffzellenanordnung 2. Durch die Überwachungseinrichtung 8 wird anhand der Temperatur des Kühlmittels beim Verlassen der Brennstoffzellenanordnung 2, der abgespeicherten Dampfdruckkurve und ggf. eines Sicherheitszuschlages ein Grenzwert für den Druck des Kühlmittels beim Verlassen der Brennstoffzellenanordnung bestimmt, der größer als der Siedegleichgewichtsdruck des Kühlmittels ist. Der Druck des Kühlmittels beim Verlassen der Brennstoffzellenanordnung 2 wird dann auf Unterschreiten dieses Grenzwertes überwacht.

Bei Unterschreiten des Grenzwertes besteht die Gefahr einer Dampfbildung des Kühlmittels in der Brennstoffzellenanordnung 2, wodurch lokale Überhitzungen in den Zellen 3 und somit Schädigungen derer Membran entstehen können. Dies wird dadurch vermeiden, dass durch die Überwachungseinrichtung 8 bei Unterschreiten des Grenzwertes die Zufuhr an Reaktanten in die Brennstoffzellenanordnung 2 abgeschaltet wird.

Eine in Figur 2 gezeigte Brennstoffzellenanlage 20 unterscheidet sich von der in Figur 1 gezeigten Brennstoffzellenanlage 1 dadurch, dass bei Unterschreiten des Grenzwertes für den Druck des Kühlmittels nicht die Zufuhr von Reaktanten in die Brennstoffzellenanordnung 2 abgeschaltet wird, sondern dass eine von der Brennstoffzellenanordnung 2 mit elektrischem Strom versorgte Last 21 reduziert wird.

Die Reduzierung der elektrischen Last 21 erfolgt durch die Überwachungseinrichtung 8 über eine Steuerleitung 23.

## Patentansprüche

1. Verfahren zur Vermeidung lokaler Überhitzungen in einer Brennstoffzellenanordnung (2), die zur Kühlung von deionisiertem Wasser durchströmt wird, wobei der Druck des Wassers nach Durchströmen der Brennstoffzellenanordnung (2) auf Erreichen oder Unterschreiten eines vorgegebenen Grenzwertes überwacht wird, der größer als der Siedegleichgewichtsdruck des Wassers ist, um eine Dampffilmbildung in der Brennstoff-zellenanordnung (2) zu vermeiden, wobei der Grenzwert für den Duck in Abhängigkent von der Temperature des Wanners nach Durchströmen der Brennstoffzellenanordnung (2) vorgegeben wird wobei bei Erreichen oder Unterschreiten des vorgegebenen Grenzwertes die Zufuhr an Reaktanten (H2, 02) in die Brennstoffzellenanordnung (2) abgeschaltet wird und/oder bei Erreichen oder Unterschreiten des vorgegebenen Grenzwertes eine von der Brennstoffzellenanordnung (2) mit elektrischem Strom versorgte Last (21) reduziert oder abgeschaltet wird.

2. Verfahren nach Anspruch 1, wobei der Druck des Wassers in einem Kühlmittelabfuhrkanal (5) gemessen wird, über den das Wasser aus der Brennstoffzellenanordnung (2) abgeführt wird.

3. Verfahren nach einem der vorhergehenden Ansprüche, wobei der Grenzwert für den Druck in Abhängigkeit von der Temperatur des Wassers in dem Kühlmittelabfuhrkanal (5) vorgegeben wird.

4. Verfahren nach einem der vorhergehenden Ansprüche, wobei das die Brennstoffzellenanordnung (2) durchströmende Wasser in einem Kreislauf (6) der Brennstoffzellenanordnung (2) eingangsseitig wieder zugeführt wird, wobei das Wasser mit einer Kühlmittelpumpe (7) durch den Kreislauf (6) gepumpt wird.

5. Brennstoffzellenanlage (1) mit einer Brennstoffzellenanordnung (2), die zur Kühlung von deionisiertem Wasser durchströmbar ist, umfassend eine Überwachungseinrichtung (8) zur Überwachung des Drucks des Wassers nach Durchströmen der Brennstoffzellenanordnung (2) auf Erreichen oder Unterschreiten eines vorgegebenen Grenzwertes, der größer als der Siedegleichgewichtsdruck des Wassers ist, um eine Dampffilmbildung in der Brennstoffzellenanordnung (2) zu vermeiden, wobei die Überwachungseinrichtung (8) einen, Temperatursensör (10) zur Erfassung der Temperatur des Wassers nach dem Durchströmen der Brennstoffzellenanordnung (2) umfasst und in der Überwachungseinrichtung (8) der Grenzwert für den Druck in Abhängigkeit von der erfassten Temperatur vorgebbar ist, wobei durch die Überwachungseinrichtung (8) bei Erreichen oder Unterschreiten des vorgegebenen Grenzwertes die Zufuhr an Reaktanten (H2, 02) in die Brennstoffzellenanordnung (2) abschaltbar ist und/oder durch die Überwachungseinrichtung (8) bei Erreichen oder Unterschreiten des vorgegebenen Grenzwertes die von der Brennstoffzellenanordnung (2) mit elektrischem Strom versorgte Last (21) reduzierbar oder abschaltbar ist.

6. Brennstoffzellenanlage (1) nach Anspruch 5, wobei ein Drucksensor (9) zur Erfassung des Druckes des Wassers in einem Kühlmittelabfuhrkanal (5) der Brennstoffzellenanordnung (2) angeordnet ist.

7. Brennstoffzellenanlage (1) nach Anspruch 5 oder 6, wobei der Temperatursensor (10) in dem Kühlmittelabfuhrkanal (5) angeordnet ist.

8. Brennstoffzellenanlage (1) nach Anspruch 7, wobei in der Überwachungseinrichtung (8) zur Ermittlung des Grenzwertes in Abhängigkeit von der Temperatur eine Dampfdruckkurve des Wassers abgespeichert ist, die die Abhängigkeit des Siedegleichgewichtsdrucks von der Temperatur beschreibt.

9. Brennstoffzellenanlage (1) nach einem der Ansprüche 5 bis 8, umfassend einen Kühlmittelkreislauf (6), durch den das durch die Brennstoffzellenanordnung (2) strömende Wassers der Brennstoffzellenanordnung (2) eingangsseitig wieder zuführbar ist, wobei in dem Kreislauf (6) eine Kühlmittelpumpe (7) zum Pumpen des Wassers durch den Kreislauf (6) angeordnet ist.

## Claims

1. Method for preventing local overheating in a fuel cell arrangement (2) through which deionised water flows for cooling, the pressure of the water being monitored for achieving or falling below a predefined threshold value after flowing through the fuel cell arrangement (2), said threshold value being greater than the boiling balance pressure of the water, in order to prevent the formation of a vapour film in the fuel cell arrangement (2), the threshold value for the pressure being predefined as a function of the temperature of the water after flowing through the fuel cell arrangement (2), the supply of reactants (H2, 02) to the fuel cell arrangement (2) being switched off upon achieving or falling below the predefined threshold value and/or a load (21) supplied with electric current by the fuel cell arrangement (2) being reduced or switched off upon achieving or falling below the predefined threshold value.

2. Method according to claim 1, the pressure of the water in a coolant discharge channel (5) being measured, the water being discharged from the fuel cell arrangement (2) via said coolant discharge channel (5).

3. Method according to one of the preceding claims, the threshold value for the pressure being predefined as a function of the temperature of the water in the coolant discharge channel (5).

4. Method according to one of the preceding claims, the water flowing through the fuel cell arrangement (2) being supplied back to the fuel cell arrangement (2) on the input side in a circuit (6), the water being pumped through the circuit (6) using a coolant pump (7).

5. Fuel cell system (1) having a fuel cell arrangement (2), through which deionised water can flow for cooling, comprising a monitoring device (8) for monitoring the pressure of the water for achieving or falling below a predefined threshold value after flowing through the fuel cell arrangement (2), said threshold value being greater than the boiling balance pressure of the water, in order to prevent the formation of a vapour film in the fuel cell arrangement (2), the monitoring device (8) comprising a temperature sensor (10) for recording the temperature of the water after flowing through the fuel cell arrangement (2) and the threshold value for the pressure being predefinable in the monitoring device (8) as a function of the temperature recorded, it being possible for the supply of reactants (H2, 02) to the fuel cell arrangement (2) to be switched off by the monitoring device (8) upon achieving or falling below the predefined threshold value and/or it being possible for the load (21) supplied with electric current by the fuel cell arrangement (2) to be reduced or switched off by the monitoring device (8) upon achieving or falling below the predefined threshold value.

6. Fuel cell system (1) according to claim 5, a pressure sensor (9) being disposed in a coolant discharge channel (5) of the fuel cell arrangement (2) for recording the pressure of the water.

7. Fuel cell system (1) according to claim 5 or 6, the temperature sensor (10) being disposed in the coolant discharge channel (5).

8. Fuel cell system (1) according to claim 7, a vapour pressure curve of the water being stored in the monitoring device (8) for determining the threshold value as a function of the temperature, said vapour pressure curve describing the dependency of the boiling balance pressure on the temperature.

9. Fuel cell system (1) according to one of claims 5 to 8, comprising a coolant circuit (6) through which the water flowing through the fuel cell arrangement (2) can be supplied back to the fuel cell arrangement (2) on the input side, a coolant pump (7) being disposed in the circuit (6) for pumping the water through the circuit (6).

## Revendications

1. Procédé pour empêcher des surchauffes locales dans un agencement ( 2 ) de pile à combustible qui, pour le refroidissement, est parcouru par de l'eau déminéralisée, la pression de l'eau, après qu'elle a traversée l'agencement ( 2 ) de pile à combustible, étant contrôlée sur le point de savoir si elle atteint ou si elle est inférieure à une valeur limite prescrite qui est plus grande que la pression d'équilibre à l'ébullition de l'eau pour éviter la formation d'un film de vapeur dans l'agencement ( 2 ) de pile à combustible, dans lequel la valeur limite de la pression est prescrite en fonction de la température de l'eau après traversée de l'agencement ( 2 ) de pile à combustible, dans lequel, lorsque l'on atteint la valeur limite prescrite ou lorsque l'on passe en dessous de celle-ci, on réduit ou on met hors circuit une charge ( 21 ) alimentée en courant électrique par l'agencement ( 2 ) de pile à combustible.

2. Procédé suivant la revendication 1, dans lequel on mesure la pression de l'eau dans un canal ( 5 ) d'évacuation de fluide de refroidissement, par lequel l'eau est évacuée de l'agencement ( 2 ) de pile à combustible.

3. Procédé suivant l'une des revendications précédentes, dans lequel on prescrit la valeur limite de la pression en fonction de la température de l'eau dans le canal ( 5 ) d'évacuation du fluide de refroidissement.

4. Procédé suivant l'une des revendications précédentes, dans lequel on envoie à nouveau du côté de l'entrée de l'eau ayant passée dans l'agencement ( 2 ) de pile à combustible dans un circuit ( 6 ) de l'agencement ( 2 ) de pile à combustible, l'eau étant pompée dans le circuit ( 6 ) par une pompe ( 7 ) de fluide de refroidissement.

5. Installation ( 1 ) de pile à combustible ayant un agencement ( 2 ) de pile à combustible qui, pour le refroidissement, peut être parcouru par de l'eau déminéralisée, comprenant un dispositif ( 8 ) de contrôle de la pression de l'eau après son passage dans l'agencement ( 2 ) de pile à combustible pour savoir si on a atteint une valeur limite prescrite ou s'il on est passé en dessous de celle-ci, laquelle est plus grande que la pression d'équilibre à l'ébullition de l'eau pour empêcher une formation de film de vapeur dans l'agencement ( 2 ) de pile à combustible, dans laquelle le dispositif ( 8 ) de contrôle comprend un capteur ( 10 ) de température pour la détection de la température de l'eau après le passage dans l'agencement ( 2 ) de pile à combustible et, dans le dispositif ( 8 ) de contrôle, la valeur limite de la pression peut être prescrite en fonction de la température détectée, dans laquelle, par le dispositif ( 8 ) de contrôle, l'envoi de réactifs ( H2, O2 ) dans l'agencement ( 2 ) de pile à combustible peut être interrompu lorsque l'on atteint la valeur limite prescrite ou lorsque l'on passe en dessous de celle-ci et/ou, par le dispositif ( 8 ) de contrôle, la charge ( 21 ) alimentée en courant électrique par l'agencement ( 2 ) de pile à combustible peut être réduite ou peut être mise hors circuit lorsque l'on atteint la valeur limite prescrite ou lorsque l'on passe en dessous de celle-ci.

6. Installation ( 1 ) de pile à combustible suivant la revendication 5, dans laquelle un capteur ( 9 ) de détection de la pression de l'eau est monté dans un canal ( 5 ) d'évacuation du fluide de refroidissement de l'agencement ( 2 ) de pile à combustible.

7. Installation ( 1 ) de pile à combustible suivant la revendication 5 ou 6, dans laquelle le capteur ( 10 ) de température est monté dans le canal ( 15 ) d'évacuation du fluide de refroidissement.

8. Installation ( 1 ) de pile à combustible suivant la revendication 7, dans laquelle dans le dispositif ( 8 ) de contrôle est mémorisée, pour la détermination de la valeur limite en fonction de la température, une courbe de tension de vapeur de l'eau, qui décrit la variation de la pression d'équilibre à l'ébullition en fonction de la température.

9. Installation ( 1 ) de pile à combustible suivant la revendication 5 à 8, comprenant un circuit ( 6 ) de fluide de refroidissement, par lequel l'eau passant dans l'agencement ( 2 ) de pile à combustible est retourné du côté de l'entrée à l'agencement ( 2 ) de pile à combustible, dans laquelle il est monté dans le circuit ( 6 ) une pompe ( 7 ) de fluide de refroidissement pour le pompage de l'eau dans le circuit ( 6 ).
